# EUROPEAN PATENT SPECIFICATION

(11) **EP 3 426 713 B1**
(45) Date of publication and mention of the grant of the patent: **15.01.2025**
(21) Application number: 17713811.2
(22) Date of filing: 06.03.2017
(51) Int. Cl.: C08G 69/28, C08G 69/40

(54) **ADDITIVE INJECTION SYSTEMS AND METHODS**
ADDITIVINJEKTIONSSYSTEME UND -VERFAHREN
SYSTÈMES ET PROCÉDÉS D'INJECTION D'ADDITIF

(30) Priority: 08.03.2016 US 201662305353 P
(43) Date of publication of application: 16.01.2019
(73) Proprietor: INVISTA Textiles (U.K.) Limited, London EC2V 7AF (GB)
(72) Inventor: MONSTER, Leen, 3214 TD Zuidland (NL)
(74) Representative: Michalski Hüttermann & Partner Patentanwälte mbB
(86) International application number: PCT/US2017/020964
(87) International publication number: WO 2017/155888

(56) References cited:
- WO-A2-2016/030764
- WO-A2-2016/030764

## Description

### TECHNICAL FIELD

The present disclosure is drawn to systems and methods related to autoclaves and the manufacture of polymeric materials.

### BACKGROUND

Polyamide polymers, such as nylon 6,6, and other polymers, can be synthesized using complex chemical engineering processes on a relatively large scale. These chemical engineering processes can include steps such as a salt strike step where polyamide (e.g., nylon 6,6) salt solutions are prepared, an evaporation step where some of the water from the salt solution is evaporated off, an autoclave process where the salt solution is placed under heat and pressure for polymerization, and extrusion/cutting steps where the essentially final polymeric raw materials are formed. Other steps can also be included. These chemical engineering processes can either be batch processes or continuous processes.

WO 2016/030764 is directed to a polyamide synthesis process without excessive foaming, particularly to a polyamide synthesis process comprising adding a polyetheramine during the polymerization process to reduce foaming.

With respect to the autoclave, there are a number of autoclaves that can be used with acceptable results. Regardless of the autoclave selected for use, there are numerous complications that can arise during polymer synthesis. Excessive foaming is one common difficulty encountered in such processes. Foaming can potentially reduce the efficiency of polymer synthesis and damage the autoclave or other process equipment. These effects can be mitigated by reducing the batch size. However, limiting the batch size reduces the amount of polymer produced in the batch, and thereby reduces the profitability of the synthesis process. Additionally, certain polymer ingredients or additives can, in some cases, cause more foaming to occur. This foaming can be reduced by avoiding such ingredients, but doing so limits the range of polyamide polymers that can be produced. This can make it difficult to produce polyamide polymers with certain desired properties. Therefore, researchers continue to search for solutions that can allow for high production of polyamide polymers with a wide range of ingredients and properties.

### SUMMARY

The invention is defined by the features of the independent claims. Disclosed are a process and apparatus for suppressing foam formation in the production of polyamide polymers.

Starting materials include polymerizable polyamide compositions, which may be otherwise observed to promote undesirable foam formation, including in the presence of commercial anti-foam additives. By selectively injecting the foam-promoting additive in accordance with the disclosed process, foam generation is decreased compared to the same process with the foam-promoting additive injected at the beginning of the process.

Disclosed is a method of preparing a polyamide polymer, comprising;
a) introducing a polymerizable polyamide composition having an initial water content into an autoclave;
b) heating the polymerizable polyamide composition to a first temperature T1;
c) venting water vapor from the autoclave for a first period of time, VT1, and carrying out the following steps (d) through (f) consecutively or concurrently;
d) injecting at least one foam-promoting additive and an anti-foam additive into the autoclave after VT1, wherein the anti-foam additive is added in a sufficient amount to provide an anti-foam additive concentration of from 110 ppm to 500 ppm in the polymerizable polyamide composition of step (d);
e) heating the polymerizable polyamide composition of step (d) in the autoclave to a second temperature T2, wherein T2 > T1;
f) venting water vapor from the autoclave for a second period of time VT2, wherein the (additized) polymerizable polyamide composition evolves less foam through the conclusion of this step (f) compared to carrying out the same steps except for injecting the foam-promoting additive to the autoclave in step (a) instead of in step (d); and
g) polymerizing the polymerizable polyamide composition in the autoclave to produce a polyamide polymer wherein the foam-promoting additive is a co-monomer and the co-monomer is a polyetheramine.

T1 and T2 can be controlled by measuring and regulating pressure.

The foam-promoting additive is a co-monomer, that is a polyetheramine.

Step (d) includes adding an anti-foam additive, for example, an anti-foam additive that contains silicon.

The disclosed polymerizing method can include a first cycle, a second cycle, and a third cycle, the first cycle comprising increasing the pressure within the autoclave from a low pressure to a relative high pressure, the second cycle comprising increasing the temperature within the autoclave while venting to maintain the pressure in the autoclave at a relative high pressure, and the third cycle comprising reducing pressure within the autoclave.

At least a portion of the additives can be injected at any time during the second cycle or the third cycle.

The injection of additives includes injecting a foam-promoting additive. Anti-foam additives are added to reduce the foaming properties of the foam promoting additives. In one example, the additive or additives can be injected during the second or third heating cycle, and preferably no earlier than one minute or longer after the beginning of the second cycle. In other words, by delaying the addition of the foam-promoting additive, foaming can be reduced. Likewise, the addition anti-foam agents or additives can also be delayed until Cycle 2 or 3, for example. To illustrate, the addition(s) can occur within the last 3, 6 or 9 minutes of the second cycle or within the first 3, 6 or 9 minutes of the third cycle.

The disclosed polymerization method can include a plurality of cycles comprising:
- a first cycle having a temperature starting between 170 to 215°C and finishing between 190 to 230°C over a period of 5 to 60 minutes, for example 20 to 40 minutes under a pressure of between 8.9 to 20.6 bar (130 to 300 Psia);
- a second cycle having a temperature starting between 190 to 230°C and finishing at between 240 to 260°C over a period of 5 to 60 minutes, for example 20 to 45 minutes under a pressure of between 8.9 to 20.6 bar (130 to 300 Psia);
- a third cycle having a temperature starting between 240 and 260°C and finishing between 250 to 320°C over a period of 5 to 60 minutes, for example 15 to 45 minutes under a pressure of between 20.6 bar (300 Psia) to atmospheric pressure; and
- a fourth cycle having a temperature starting between 250 to 320°C and finishing between 250 to 320°C over a period of 1 to 80 minutes under a pressure of between atmospheric pressure and 0.2 bar (200 mBar) absolute vacuum, for example 10 to minutes, for example, 15 to 80 minutes.

The anti-foaming agent is added in a sufficient amount to provide an anti-foaming agent concentration of from 110 ppm to 500 ppm in the polymerizable polyamide composition. For example, an anti-foaming agent can be effective at 5 or 10 ppmw, and requires higher concentrations of from 25 ppm to 500 ppm in the polymerizable polyamide composition, for example, from 50 ppm to 300 ppm in the polymerizable polyamide composition. While the mechanism of failure is not fully understood, it has been observed that adding an anti-foaming additive at the beginning of the first cycle can be ineffective to suppress foaming.

The foam-promoting additive can comprise a polyetheramine in a sufficient amount to provide a polyetheramine concentration from 1 wt% to 20 wt% in the final polyamide composition, for example, from 5 wt% to 15 wt% in the final polyamide composition, for example, from 8 wt% to 18 wt% in the final polyamide composition. Suitable polyetheramines and methods for incorporating them into polyamides are disclosed in WO2014/057363 to Langrick and Zaltieri (assigned to INVISTA Technologies, S.á r.l.).

The autoclave can optionally be agitated. Step (d) of the disclosed process (the step of injecting the foam-promoting additive) further comprises injecting an anti-foaming agent and a co-monomer.

The present disclosure herein relates to various systems and methods for preparing polyamide polymers. The method of preparing a polyamide polymer includes introducing a polymerizable polyamide composition into an autoclave. The polymerizable polyamide composition is heated, and water vapor is vented from the autoclave for a period of time. At least one additive can be injected into the autoclave when the polymerizable polyamide composition water content reduces to 30 wt% or less of the initial water content (i.e. from the starting point when the polymerizable polyamide composition is introduced into the autoclave).

The polymerizable polyamide composition is polymerized to produce a polyamide polymer. The additive is an antifoaming agent and a co-monomer.

### BRIEF DESCRIPTION OF THE DRAWINGS

FIG. 1 is a non-limiting exemplary graph depicting relative plots of pressure, heat, and venting with respect to each other during a batch process including 5-cycle in accordance with embodiments of the present disclosure.
FIG. 2 is a flow chart showing multiple methods and method options for preparing a polyamide polymer in accordance with embodiments of the present disclosure.
FIG. 3 is a schematic cross-sectional view of an agitated autoclave that is usable in accordance with embodiments of the present disclosure.
FIG. 4 is a schematic cross-sectional view of an alternative agitated autoclave with an internal heating coil (in contrast to an external heating jacket) that is usable in accordance with embodiments of the present disclosure.
FIG. 5 is a schematic cross-sectional view of an alternative autoclave that is usable in accordance with embodiments of the present disclosure;
FIG. 6 shows a generalized flow diagram of a polyamide polymer production process from salt strike to polymerization, including an autoclave associated with an additive injector for injection of additives directly to the autoclaves in accordance with embodiments of the present disclosure;
FIG. 7 shows a generalized flow diagram of an additive injection system in accordance with an embodiment of the present disclosure; and
FIG. 8 is a graph of temperature vs. time as measured by thermal foam detectors in an autoclave in accordance with an embodiment of the present disclosure.

### DEFINITIONS

As used in this specification and the appended claims, the singular forms "a," "an" and "the" include plural referents unless the context clearly dictates otherwise. Thus, for example, reference to "an additive" includes a plurality of additives.

The term "polymerizable polyamide composition," "polymerizable composition" or "polymerizable solution" refers to the solution that is added to an autoclave in accordance with examples of the present disclosure, and that upon processing the polymerizable composition within the autoclave under certain heat and pressure profiles, a polymer can be formed that may be extruded or otherwise harvested for further use. It is noted, however, that as the polymerizable composition begins to polymerize within the autoclave, the solution will begin to thicken into a polymer. Thus, it is difficult to delineate at what point it ceases to be a polymerizable composition compared to a thickening polymer. As a result, for convenience, the term "polymerizable solution" or "polymerizable composition" may be used herein to describe the composition in the autoclave regardless of its polymerization state. Additionally, the term "solution" is not intended to describe every component in the composition, as some materials or additives may actually be dispersed in the liquid, e.g., titanium dioxide. The term "solution" is merely used for convenience as some materials will be in solution at the outset.

The term "polyamide salt" refers to the salt that is included in the polymerizable polyamide composition (optionally along with other additives) that provides the basic polymerizable material for forming the polyamide polymer. If the polyamide polymer is nylon 6,6, for example, then the salt can be prepared from a condensation reaction between adipic acid and hexamethylene diamine. A "polyamide salt composition" refers to a composition produced in a salt strike that includes a polyamide salt and a portion of water. Other additives can also be included in the polyamide salt composition, either introduced prior to the agitated autoclave, or, as described herein, the additives can be introduced directly into the autoclave.

The term "additive injector" or "injector" generally refers to all or part of a component or collection of components that act to deliver an additive to an autoclave. The additive injector can be said to include a variety of elements including, but not limited to, an additive reservoir where the additive can be stored prior to delivery to an autoclave, delivery lines that carry the additive to an autoclave, and/or a port that allows passage of the additive directly into the autoclave or other inlet that delivers the additive to the autoclave. A valve can be present on the additive injector, or the autoclave, as would be appreciated by one skilled in the art.

The term "cycle" refers to the stages of a batch polymerization process as defined primarily by the pressure profile within the agitated autoclave. A first cycle (Cycle 1) occurs at the beginning of the batch process while the pressure is being increased from a low pressure to a relative high pressure. A second cycle (Cycle 2) occurs as the relative high pressure is maintained for a period of time, typically assisted by pressure venting, for example, steam venting with pressure control. A third cycle (Cycle 3) occurs as the relative high pressure is reduced back to a low pressure (which can optionally be an even lower pressure than the initial low pressure as per the use of a vacuum). A fourth cycle (Cycle 4) occurs as the (vacuum) low pressure is maintained for a period of time. A fifth cycle (Cycle 5) occurs as the prepared polymer in the autoclave is being extruded by increased pressure from the agitated autoclave vessel.

The terms "relative high pressure" refer to pressures within a batch process where the pressure is at essentially its highest level. Thus, the pressure is "high" relative to the other pressure levels during the batch cycle process. For example, an initial low pressure can be increased to a relative high pressure during Cycle 2. In considering a pressure profile of a 5 cycle batch, when the pressure is at the highest pressure of a batch process profile, the "relative high pressure" has been reached. In some of the examples shown herein, a relative high pressure of 15.9 to 20.7 Bar (230 to 300 psi) is shown, though other pressure profiles may provide a relative high pressure outside of this range.

The term "agitating" refers to the state of the agitator while it is functioning at a level sufficient to cause at least some polymerizable polyamide composition or resultant polymer mixing. In one example, the agitator can be an auger that is spinning within the agitated autoclave at up to 100 RPM, but can range from 5 RPM to 90 RPM, for example. Not all autoclaves include an agitator, so this definition is relevant to only agitated autoclaves, and not non-agitated autoclaves.

The term "apparatus" and "system" can be used interchangeably herein.

As used herein, all percent compositions are given as weight-percentages, unless otherwise stated. When solutions of components are referred to, percentages refer to weight-percentages of the composition including solvent (e.g., water) unless otherwise indicated.

As used herein, all molecular weights (Mw) of polymers are weight-average molecular weights, unless otherwise specified.

As used herein, pressure is measured in pounds per square inch or Psi. One atmosphere (atm.) pressure is equal to 14.7 Psia and 1.013 Bar. Psia is pressure in Psi absolute. 1 mBar means 1 milibar and is equal to 0.75 mmHg. 1 bar pressure equals 14.5 Psi.

The term "RV" means "relative viscosity" and can be determined using a method according to ASTM D789 known at the time of filing the present disclosure. See ASTM D789-15, Standard Test Methods for Determination of Solution Viscosities of Polyamide (PA), ASTM International, West Conshohocken, PA, 2015, www.astm.org.

It is noted in the present disclosure that when describing the autoclaves or methods, individual or separate descriptions are considered applicable to one another, whether or not explicitly discussed in the context of a particular example or embodiment. For example, in discussing a particular additive injector per se from a specific device, the method embodiments are also inherently included in such discussions, and vice versa.

As described previously, various polymers, including polyamide polymers, can be synthesized using complex chemical engineering processes on a relatively large scale. These chemical engineering processes can include a variety of steps, each subject to complications that can both increase the cost and decrease the rate of manufacturing these valuable polymers. Accordingly, various methods and systems are described herein that can help overcome some of these complications. While each of these advancements in the art will be described individually and separately for the purpose of clarity, it will be appreciated by one skilled in the art that each of these advancements, or any desirable combination thereof, can be implemented jointly.

### DETAILED DESCRIPTION

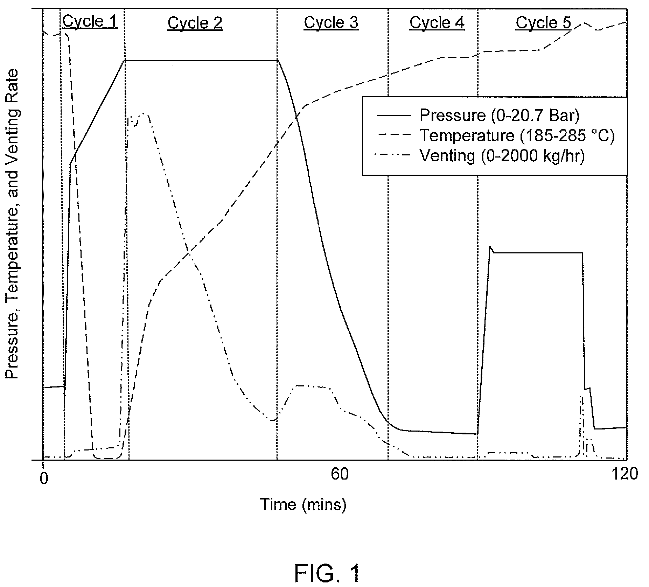

Before discussing the methods and systems of the present disclosure, it can be useful to understand a generalized plot of the pressure, temperature, and venting of an autoclave in one embodiment of a five cycle process for the production of a polymer. FIG. 1 shows a generalized plot of the pressure, temperature, and venting over a five cycle process. Specifically, a first cycle (Cycle 1) occurs at the beginning of the batch process while the pressure is being increased from a low pressure to a relative high pressure. A second cycle (Cycle 2) occurs as the relative high pressure is maintained for a period of time. Thus, as the temperature rises, which inherently increases the pressure, the relatively high pressure can actually be maintained by venting the autoclave, as shown by the venting profile of FIG. 1 in Cycle 2. A third cycle (Cycle 3) occurs as the relative high pressure is reduced to an even lower pressure than initially present, which can be, in some examples, reduced to vacuum levels for a fourth cycle (Cycle 4), which in this example, occurs as the lower (vacuum) pressure is maintained for a period of time. It is noted that vacuum pressure is not required, but is shown in this example by way of example only. A fifth cycle (Cycle 5) occurs as the pressure is increased again for the purpose of extruding the polymer from the agitated autoclave vessel.

A more detailed description of an embodiment of a five cycle process for preparing a polymer, such as shown in FIG. 1, is described below. In preparation for starting the polymer preparation process, a salt solution can be brought into the autoclave, such as an agitated autoclave, from an evaporator.

During a first cycle (Cycle 1), the pressure can be increased by introducing the polymerizable composition, such as a polyamide composition, to the vessel, by a pressure source, by heat, to a specified level. Pressure levels in this apparatus can range from vacuum pressures to 20.6 bar (300 Psia). Typically, during much or all of Cycle 1, there is little to no venting of the autoclave, as one objective is to increase the pressure of the vessel.

In a second cycle (Cycle 2), the pressure is held substantially constant at a relative high pressure, e.g., from 15.8 to 20.6 bar (230 to 300 Psia). As the temperature of the autoclave increases the pressure is maintained substantially constant at the relative high pressure by venting the autoclave, including in some embodiments, maximum venting. In this specific example, maximum venting is shown at 2000 kg/hr (venting range from 0 to 2000 kg/hr), but it is noted that maximum venting may be at levels ranging from 1500 to 2500 kg/hr, for example, depending on the apparatus in place, though venting levels outside of this range can also be used.

As also shown in FIG. 1, a third cycle (Cycle 3) is defined primarily by a pressure reduction. As can be seen from the figure, some venting also can occur during Cycle 3. In many cases, foaming can be a problem during Cycle 3. At the end of Cycle 3, with specific reference again to nylon 6,6, the relative viscosity can be 16 to 20 units (RV) and the water concentration can be 0.002 to 0.006 gr/gr, for example.

A fourth cycle (Cycle 4) can be characterized by an even lower pressure than initially present at the beginning of the autoclave process, and can be achieved using vacuum pressure. Furthermore, during the fourth cycle, there can be a ramping down of the agitator RPM. At the end of Cycle 4, again for nylon 6,6, the relative viscosity can be 32 to 50 units (RV) and the water content can be 0.001 to 0.004 gr/gr.

A fifth cycle (Cycle 5) can be characterized as the casting or extrusion cycle where the polymer that is formed is extruded and pelleted for further use. Additional steps after extrusion are typically carried out, as would be understood by one skilled in the art. It is noted that these cycle descriptions are for example purposes only, and many other cyclic profiles are effective for use with the apparatuses and methods of the present disclosure.

As mentioned above, excessive foaming of the polymerizable polyamide composition in the autoclave can result in processing problems and potentially failure of the batch. Foaming has been found to be especially problematic in Cycles 1, 2, and 3. In some examples, anti-foaming agents can be added to the polyamide salt composition at the salt strike stage of the synthesis process. In one example, adding from 10 ppm to 40 ppm of an anti-foaming agent at the salt strike stage (or downstream of the salt strike stage at the evaporator) can control foaming during Cycles 1 and 2. However, it has been found that excessive foaming can still occur during Cycle 3. The foaming during Cycle 3 can be controlled by adding additional anti-foaming agent, such as from 25 to 500 ppm in the polymerizable polyamide composition. However, adding high amounts of the anti-foaming agent have been found to actually increase foaming during Cycles 1 and 2.

In some cases, including various co-monomers with the polyamide salt composition can also increase foaming in the autoclave. Polyetheramines are added as a co-monomer with a nylon 6,6 salt to make polyamides having ether groups incorporated therein. However, adding polyetheramine at the salt stage results in excessive foaming throughout the system. The excessive foaming can prevent batch completion.

It has been found that injecting additives directly into the autoclave at a later time in the polymerization process can prevent some or all of the undesirable foaming caused by including the additives at the salt stage. Without being bound to a particular theory, it is believed that in some cases injecting additives into the autoclave after a majority of the water has been removed from the polymerizable polyamide composition can reduce the amount of foaming occurring due to the additives. In some cases, the additives can be injected at or near the beginning of Cycle 3. Therefore, excessive foaming problems that have been encountered in Cycle 3 can be reduced or eliminated.

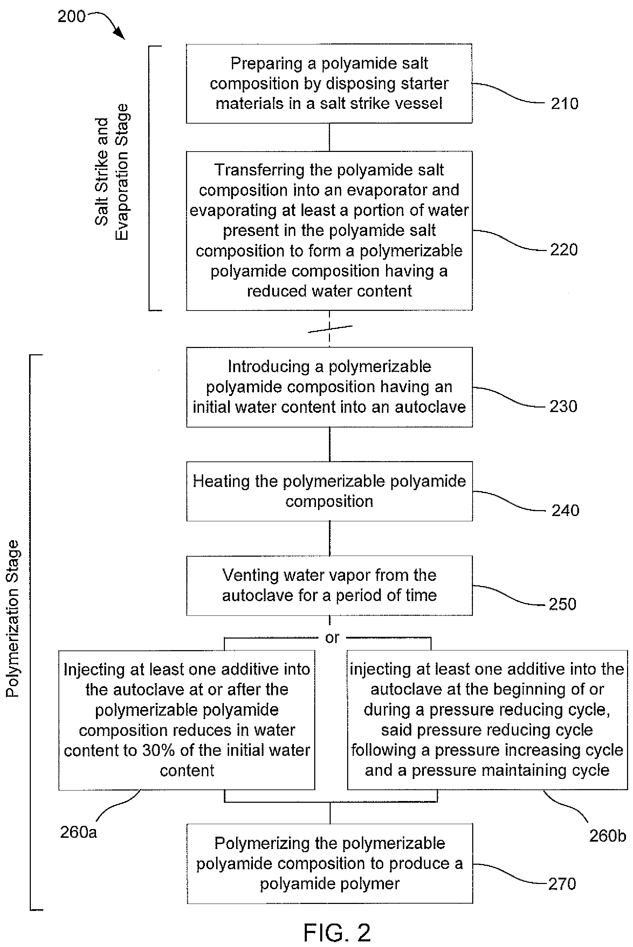

With the above description in mind, in one embodiment of the present disclosure, a method of preparing a polyamide polymer can be performed according to the flow chart shown in FIG. 2. This flow chart is provided by example only, and some variation can be carried out by those skilled in the art or as described further herein. The method 200 can include the following, in two stages, namely a salt strike/evaporation stage, and a polymerization stage. The present disclosure is drawn primarily to the polymerization stage, but the salt strike and evaporation stage is shown for context and for the purpose of describing certain specific examples. The salt strike and evaporation stage includes preparing 210 a polyamide salt composition by disposing starter materials in a salt strike vessel; transferring 220 the polyamide salt composition into an evaporator and evaporating at least a portion of water present in the polyamide salt composition to form a polymerizable polyamide composition having a reduced water content. The polymerization stage can include introducing 230 the polymerizable polyamide composition from the evaporator into an autoclave. If a different polymerizable polyamide composition preparation technique is used, this step merely starts with the composition with an initial content of water. Additional steps include heating 240 the polymerizable polyamide composition, and venting 250 water vapor from the autoclave for a period of time. Regarding the next step, in one alternative, the method includes injecting 260a at least one additive into the autoclave. In one specific example, the polymerizable polyamide composition can have a water content that is 30 wt% or less of the initial water content. Alternatively, the method can include injecting 260b at least one additive into the autoclave at the beginning of or during a pressure reducing cycle where the pressure reducing cycle follows a pressure increasing cycle and a pressure maintaining cycle. An additional step can include polymerizing 270 the polymerizable polyamide composition to produce a polyamide polymer. It is to be emphasized that these specific steps, and their combination, are provided by way of example only. Additional steps of heating and venting can occur after the injecting step as well, as described elsewhere herein.

The additive can be injected into the autoclave when the water content of the polymerizable polyamides composition is reduced to 30 wt% or less of the initial water content. In other words, the additive can be injected when the water content is 30 wt% or less of the water that was present when the polymerizable polyamide composition was introduced into the autoclave.

Waiting until the polymerizable polyamide composition has a low water content can reduce foaming associated with certain additives, In further embodiments, the additive can be injected when the water content is reduced to less than 20 wt%, less than 10 wt%, or less than 5 wt% of the water present when the polymerizable polyamide composition was introduced into the autoclave.

In some embodiments, the additive can be injected at certain points in the processing cycles described above. For example, the process of polymerizing the polymerizable polyamide composition can include at least a first cycle, a second cycle, and a third cycle. In the first cycle, the pressure within the autoclave can be increased from a low pressure to a relative high pressure. The second cycle can include increasing the temperature within the autoclave while venting to maintain the pressure in the autoclave at a relative high pressure. During the third cycle, the pressure within the autoclave can be reduced.

In a more specific example, polymerizing includes a plurality of cycles including: a first cycle having a temperature starting between 170 to 215°C and finishing between 190 to 230°C over a period of 10 to 40 minutes under a pressure of between 8.9 to 20.6 bar (130 to 300 Psia); a second cycle having a temperature starting between 190 to 230°C and finishing at between 240 to 260°C over a period of 10 to 45 minutes under a pressure of between 8.9 to 20.6 bar (130 to 300 Psia); a third cycle having a temperature starting between 240 and 260°C and finishing between 250 to 320°C over a period of between 15 to 45 minutes under a pressure of between 20.6 bar (300 Psia) to atmospheric pressure; and a fourth cycle having a temperature starting between 250 to 320°C and finishing between 250 to 320°C over a period of 15 to 80 minutes under a pressure of between atmospheric pressure and 0.2 bar (200 mBar) absolute vacuum.

In a particular embodiment, the additive, or at least a portion of the additive, can be injected during the third cycle. In a further embodiment, the additive, or a portion thereof, can be injected at the beginning of the third cycle. In yet another embodiment, the additive or portion thereof can be injected within the last 3 minutes of the second cycle or within the first 3 minutes of the third cycle. In yet another embodiment, the additive or portion thereof can be injected within the first last 6 minutes of the second cycle or within the first 15 minutes of the third cycle.

The additive can be a single additive or a mixture of multiple additives. The additive includes an anti-foaming agent and a co-monomer. The co-monomer is a polyetheramine that can be another monomer that is not present in the polyamide salt composition at the beginning of the synthesis process. The co-monomer is a polyetheramine. As used herein, "polyetheramine" refers to an oligomer or polymer that contains a chain of multiple ether groups with at least one amino group present. In some examples, polyetheramines can include a polyether backbone with amino groups attached at terminal ends of the polyether backbone. In specific embodiments, the polyetheramine can be a polyetheramine as described in WO 2014/057363 A1 to Zaltieri, et al.

The term "foam-promoting additive" means an additive that increases the formation of foam, compared to the behavior of substantially the same composition without the additive. For nylon-6,6 polymerization, polyetheramines are one example of a class of compounds that act as foam-promoting additives.

Polyetheramines can be incorporated into the polyamides described herein as an additional monomer. This can provide a polyamide polymer containing oxyethylene groups (-OCH2CH2-) in the polymer backbone. The oxyethylene groups increase the hydrophilicity of the polymer, which can be desirable for some applications such as improving the properties of yarns made from the polyamide polymer. In some examples, the polyetheramine can be added to make improved nylon polymer compositions. These polyamides can comprise a nylon and a polyetheramine. Such polymers can be suitable for making a yarn or fiber and a textile or fabric or garment containing such yarns or fibers.

In some examples, the polyetheramine used as an additive can have a molecular weight of at least 1500 and an Amine Hydrogen Equivalent Weight (AHEW) of less than 10 percent higher than the idealized AHEW for the polyetheramine. The term Amine Hydrogen Equivalent Weight (AHEW) is defined as the molecular weight of the polyetheramine divided by the number of active amine hydrogen per molecule. For illustration, an idealized polyetheramine having an average molecular weight of 2000 and where all the ends of the polyether were amine ends, hence contributing 4.0 active amine hydrogens per molecule would have an AHEW of 500 g per equivalent. If, for comparison, 10 percent of the ends were in fact hydroxyl rather than amine, then there would be only 3.6 active amine hydrogens per molecule and the polyetheramine would have an AHEW of 556 g per equivalent. The number of active amine hydrogen per molecule, and therefore the AHEW of a given polyetheramine can be calculated according to known and conventional techniques in the art; however it is typically calculated by determining the amine group nitrogen content using the procedure described in ISO 9702.

In further embodiments, the polyetheramine can have a molecular weight of at least 2500 or at least 5000. Additionally, in other embodiments the polyetheramine can have an Amine Hydrogen Equivalent Weight (AHEW) of less than 8 percent higher than the idealized AHEW for the polyetherdiamine, less than 5 percent higher than the idealized AHEW for the polyetherdiamine, or less than 2 percent higher than the idealized AHEW for the polyetherdiamine.

In some cases, polyamides produced using the polyetheramine additives can have a moisture regain ranging from 10 wt% to 30 wt%. Such regain can allow for improved processability during subsequent processing of the polyamide compositions. For example, the polyamide can have an elongation to break of from 20% to 90% when spun into a yarn. The polyamide composition may be either an acid (anionic) or base (cationic) dyeable polymer, as discussed herein. In one embodiment, at least 85 per cent of the polymer backbone (between amide units) can comprise aliphatic groups. The nylon components of the polymers can be polyhexamethylene adipamide (nylon 6,6), polycaproamide (nylon 6), or copolymers of either of these. In one embodiment, the nylon can be nylon 6,6. Generally, the nylon can be present in the polyamide in an amount ranging from 50 wt% to 95 wt%.

The moisture regain of a polymer is measured by the following method. A sample (100g) of the polymer is dried for 18 hours at 80°C under vacuum. The initial moisture level of this dried polymer sample can be measured using an Aquatrac (PET version (4 Digit); Brabender Messtechnik) at 160°C setting on 1.9 g polymer. A moisture level measured using this method of less than 0.5 wt% is taken to indicate that the polymer had been dried sufficiently.

The dried sample is then immersed in demineralized water (500g) at ambient temperature (20°C) without any agitation. After 48 hours a sample is removed (approx. 10g) and patted dry with an absorbent tissue. A portion of the sample (approx. 5g; weight of wet sample) is weighed accurately into a foil dish and placed in an oven at 80°C under vacuum for 18 hours. The dish is removed and placed in a desiccator to cool, and then reweighed (weight left after drying). This procedure is repeated at intervals thereafter (e.g. 72, 144, 190 and 220 hours) up to 220 hours. Moisture uptake was determined by the following calculation: Moisture uptake = 100 * (weight of wet sample - weight left after drying) / weight of sample after drying.

The moisture regain of the polymer is defined as the moisture uptake after 220 hours or until the sample has reached moisture uptake equilibrium (which is defined as a weight change of no more than 1 wt% in a 24 hour period), whichever is the earlier. Thus, if moisture uptake equilibrium has not been reached by 220 hours the moisture regain is the moisture uptake at 220 hours. When the moisture uptake equilibrium is reached before 220 hours, the moisture regain is the average (mean) of the moisture uptake for the first two consecutive measurements taken at equilibrium.

As such, the polyamides produced using the polyetheramine additives can have a moisture regain ranging from 10 wt% to 30 wt%. In further examples, the polyamides can have a moisture regain ranging from 10 wt% to 25 wt%, or from 15 wt% to 25 wt%. Such regain can allow for improved processability during subsequent processing of the polyamide.

The polyetheramine additive can be used in a sufficient amount to provide a polyetheramine concentration from 1 wt% to 20 wt% in the polymerizable polyamide composition. In further examples, the concentration of polyetheramine can be from 5 wt% to 15 wt%, from 10 wt% to 15 wt%, or from 8 wt% to 18 wt%.

In one example, the polyetheramines described herein can be made by reacting polyethyleneglycol of molecular weight of 2000 with three to four molecules of propyleneoxide to convert the primary terminal hydroxyl groups to secondary hydroxyl ends. The secondary hydroxyl ends are subsequently converted into amine groups. Incomplete conversion results in a polyetheramine product containing residual hydroxyl end groups, such hydroxyl groups are incapable of forming amide groups during a polyamide polymerization process, limiting the rate and degree of polymerization, and are hence undesirable. Such incomplete conversion is reflected in the AHEW value of the polyetheramine being higher than the idealized value. The Technical Data Sheet for Elastamine^{®} RE-2000 describes the polyetheramine as being a polyetherdiamine of approximate molecular weight 2000, hence it has an idealized AHEW of 500 g per equivalent, the datasheet further reports the actual AHEW as being 505 g per equivalent. For comparison, the Technical Data Sheet for Jeffamine^{®} ED-2003 describes the polyetheramine as being a polyetherdiamine of approximate molecular weight 2000; hence it also has an idealized AHEW of 500 g per equivalent, the datasheet further reports the actual AHEW as being 575 g per equivalent.

In some examples, the polyetheramine can be a polyetherdiamine. In other examples, the polyetheramine can be an alkylpolyetheramine. In one aspect, the polyetheramine can include aliphatic groups. In still another aspect, the polyetheramine can be Elastamine^{®} RE-2000 (Huntsman International LLC). In one embodiment, the polyetheramine can have the following structure:

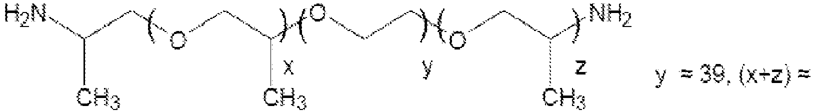

In a further embodiment, the polyetheramine can be α,ω-diamino poly(oxyalkylene-co-oxyalkylene ether) copolymer. In one aspect, the α,ω-diamino poly(oxyalkylene-co-oxyalkylene ether) copolymer can be α,ω-diamino poly(oxyethylene-co-oxytetramethylene ether) copolymer, as disclosed in United States Patent Application Publication No. 2012/0065362 A1. Such a polyetheramine can be made by reacting polyethyleneglycol of molecular weight of 2000 with three to four molecules of propyleneoxide to convert the primary terminal hydroxyl groups to secondary hydroxyl ends.

As discussed herein, a polyetherdiamine can be employed in the polymerization of nylon monomers to form a polyamide which may be spun into nylon yarns which exhibit good hydrophilicity properties. Such properties can impart tactile aesthetics and wear comfort highly desired in apparel goods manufactured from these yarns.

The polyamides described herein can have various physical properties. In one embodiment, the polyamide can have 42 to 49 amine end group gram-equivalents per 1000 kilograms of polymer. Additionally, the polyamide can have a relative viscosity ranging from 35 to 45. In another embodiment, the relative viscosity can be calculated based on a formic acid test method according to ASTM D789-86 known at the time of filing the present disclosure in the United States Patent and Trademark Office. The polyamide can have a yellowness index from 30 to 45. In a more detailed aspect, the polyamide can have an L* color coordinate from 75 to 85. In another aspect, the polyamide can have an a* color coordinate from -5 to 5. In still another aspect, the polyamide can have a b* color coordinate from 5 to 25.

The additive includes an anti-foaming agent. The anti-foaming agent is added in a sufficient amount to provide an anti-foaming agent concentration of from 110 ppm to 200 ppm in the polymerizable polyamide composition. As is shown below in the Examples, these concentrations of anti-foaming agent can be effective at reducing or eliminating foaming during Cycle 3. Suitable anti-foaming agents include activated polydimethylsiloxane, such as ACC Silicones AF1316, silicone antifoam 16% solids) as well as copolymeric silicone antifoams such as Silwet L-7605, available from Momentive Performance Materials, Inc.).

In another example, the method of preparing a polyamide polymer can include introducing a polymerizable polyamide composition having an initial water content into an autoclave, and heating the polymerizable polyamide composition. Additional steps can include venting water vapor from the autoclave for a period of time, thereby reducing water content from the polymerizable polyamide composition, and injecting at least one additive into the autoclave at the beginning of or during a pressure reducing cycle. The pressure reducing cycle can follow a pressure increasing cycle and a pressure maintaining cycle. A further step can include polymerizing the polymerizable polyamide composition to produce the polyamide polymer.

The methods of the present disclosure can be carried out using various apparatuses. In one example, an apparatus for production of a polyamide polymer can include an autoclave, an additive injector, and a controller. The autoclave can also be configured to heat the polymerizable polyamide composition in order to remove water from the polymerizable polyamide composition and polymerize the polymerizable polyamide composition to produce a polyamide polymer. The additive injector can be associated with the autoclave and configured to inject an additive into the autoclave. The controller can be programmed to inject the additive into the autoclave when the polymerizable polyamide composition reaches a predetermined time or predetermined cycle, such as when the water content is reduced to 30 wt% or less of the initial water content. For example, water content could be reduced to 20, 25, 30, 35, 40, 45 or 50% of the initial water content.

In a further embodiment, an apparatus for production of a polyamide polymer can include an autoclave, an additive injector, a co-monomer reservoir, and an anti-foaming agent reservoir. The autoclave can be operably connected to the evaporator such that the polymerizable polyamide composition is deliverable from the evaporator to the autoclave. The additive injector can be associated with the autoclave and configured to inject an additive into the autoclave. The additive includes a co-monomer and an anti-foaming agent. The co-monomer reservoir can be connected to the additive injector such that the co-monomer is deliverable from the co-monomer reservoir to the autoclave through the additive injector. The anti-foaming agent reservoir can also be connected to the additive injector such that the anti-foaming agent is deliverable to the autoclave together with the co-monomer.

Furthermore, a salt strike vessel and an evaporator can be used to produce a polymerizable polyamide composition. The salt strike vessel is used to accurately mix the polyamide salt ingredients and water. The evaporator is used to partially remove the solvent water. The produced polymerizable polyamide composition is then introduced (as the polymerizable polyamide composition with the initial water content) into the autoclave for polymerization.

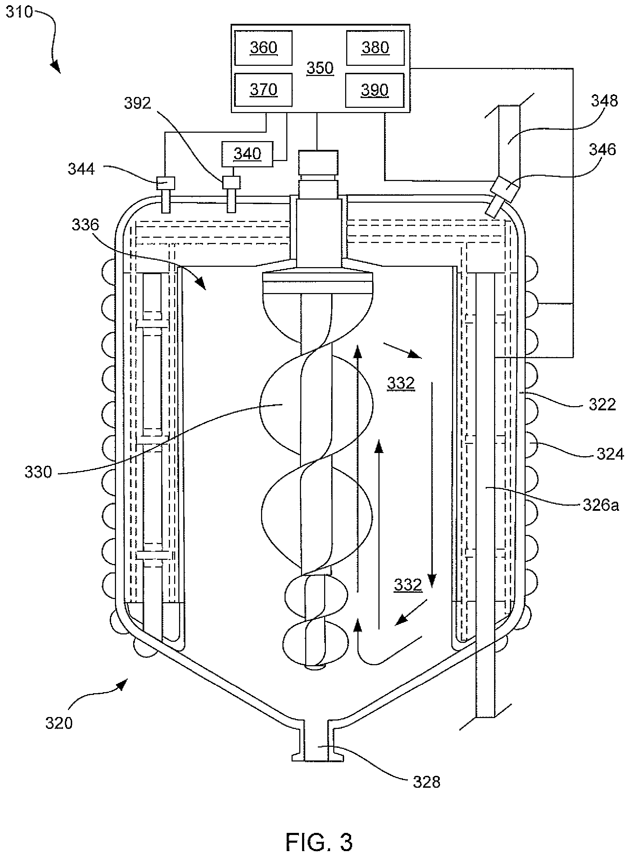

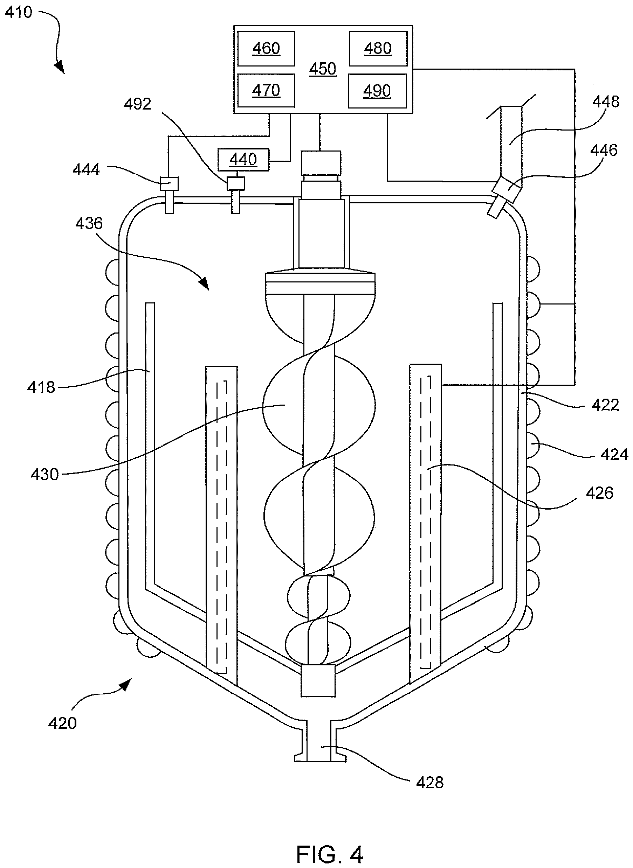

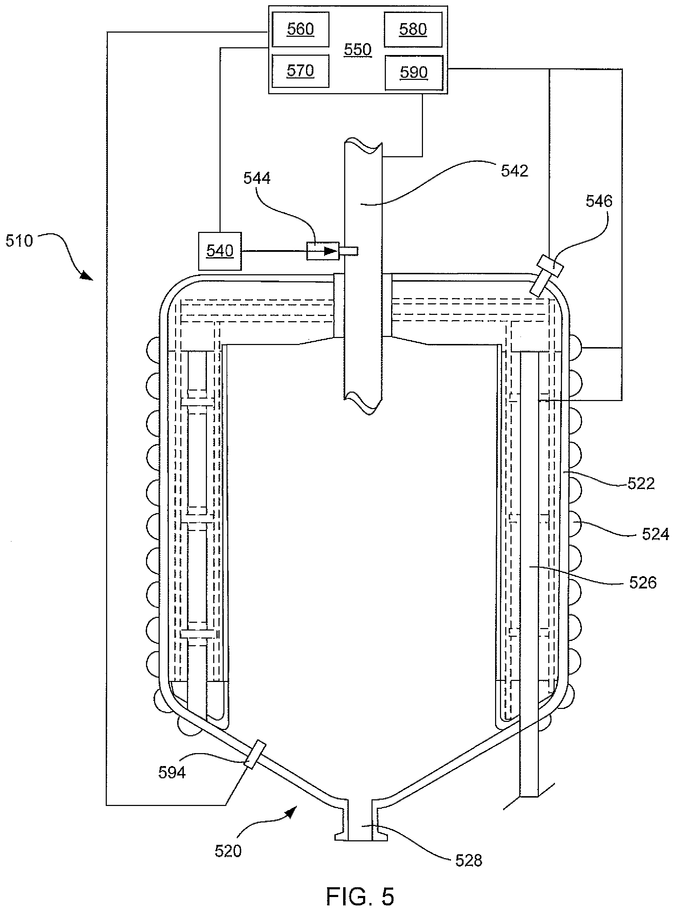

In various embodiments, the autoclave used for the polymerization can be an agitated autoclave or a non-agitated autoclave. FIG. 3 and 4 show schematic cross-sectional views of embodiments of agitated autoclaves in accordance with the present technology. FIG. 5 shows a schematic cross-sectional view of a non-agitated autoclave in accordance with examples of the present technology. These figures are not necessarily drawn to scale, and do not show each and every detail that can be present in an agitated autoclave, opting instead to show schematic representations of features particularly relevant to the present disclosure.

The agitated autoclave 310, 410 of FIGS. 3 and 4, respectively, can include an autoclave vessel 320, 420 and an agitator or auger 330, 430 in this example. The vessel includes a vessel wall 322, 422, which is typically a cladded vessel wall, and the vessel wall and/or other structures are adapted to support one or more type of heating components 324, 424, 326, 426. In this example, external jacket heating components are shown at 324, 424 and internal heating components are shown at 326a and 426. FIG. 3 shows the internal heating component 326a near the vessel wall, whereas FIG. 4 shows the internal heating component 426 nearer the agitator or auger. Also shown in FIG. 4 is a pair of refresher bars 418 that work with the central agitator or auger to refresh the polymer. Essentially, the agitator works to move the polymer upward along a center portion, and the pair of refresher bars are used to refresh the molten polymer by removing the polymer from the side wall surfaces as the molten polymer is churned. This arrangement can improve the heat transfer within the system, and can reduce the height of the vortex caused by the agitation. The external jacket heating components can be used to raise the temperature and pressure of the polymerizable composition or polymer contained within the vessel, and the internal heating components in particular can be used for the additional purpose of preventing polymer from becoming adhered to an interior surface of the vessel wall. It is noted that the interior heating components are shown schematically in cross-section, but it is understood that any shape or configuration of interior heating components can be used. It is also noted that the heating components can be configured or adapted to carry any fluid known in the art for providing heat to autoclaves, including gases and/or liquids. Furthermore, at the bottom end of the autoclave vessel is an extrusion valve opening 328, 428. The valve is not shown, but this is the location where polymer prepared in the autoclave is extruded for further processing.

With respect to a specific agitation process described herein, in the configuration shown, the agitator or auger 330, 430 will bring the polymerizable composition (or polymer as it forms) upward toward a central region of the autoclave vessel 320, 420 and downward toward the vessel wall 322, 422 in the flow pattern 332 shown in FIG. 3. A similar flow pattern will be present in the autoclave shown in FIG. 4, except that the refresher bars 418 will provide additional refreshing agitation near the vessel wall 422. In either case, when the auger is agitating, the auger can be moving at an RPM level sufficient to cause at least some mixing of the polymerizable composition or polymer in accordance with the pattern shown. For example, the auger or agitator can be spinning within the agitated autoclave at up to 100 RPM, but is normally set to a speed of 5 RPM to 90 RPM, or from 70 RPM to 90 RPM, for example. RPM levels outside this range can also be used, as would be appreciated by one skilled in the art.

An inlet valve 344, 444 and can be used to add the polymerizable composition, other additives, or gasses to increase the pressure within the autoclave vessel. Typically, pressure is modulated within the vessel by introduction of the polymerizable composition and modulation of the heating profile. Furthermore, a venting system is also present, which includes an autoclave venting valve 346, 446, and a vent line 348, 448. The venting system is present for venting gases from the autoclave vessel, through the venting valve, and into the vent line 348, 448 in order to reduce or maintain the pressure of the autoclave. It is noteworthy that any type valve known in the art can be used for the venting valve or any of the other valves discussed herein. Furthermore, it is also noted that irrespective of the description and shown location of these inlets and valves, these or other ports can be used differently than shown for any purpose designed by the user, as would be appreciated by one skilled in the art. As previously described, during a second cycle of the polymerization process within the autoclave, the pressure is brought to a relative high pressure and maintained substantially constant during the cycle though a combination of increasing heat coupled with venting of the autoclave. For example, the pressure during the second cycle can be maintained at from 15.9 Bar (230 psi) to 20.7 Bar (300 psi) during the entire second cycle, though pressure profiles outside of this range may also useable in some embodiments. Generally, the second cycle can last from 10 to 45 minutes although variations of duration can be adjusted.

In further detail regarding the autoclave, in some embodiments one or more of the mechanisms of the autoclave can be automated. For example, as shown in FIGS. 3 and 4, the autoclave can include a controller 350, 450, which can include various sub-controllers or modules 360, 460, 370, 470, 380, 480, 390, 490 and can be used to automatically carry out the general functions or process steps of the agitated autoclave. For example, the heating component(s) 324, 424, 326, and/or 426 can be controlled by a heating module 360, 460. The pressure of the autoclave can be controlled utilizing the pressure control module 370, 470 which can control the inlet valve 344, 444 and the venting valve 346, 446 of the autoclave. It is noted that pressure can also be controlled, e.g., increased, by increasing heat within the autoclave. Thus, the pressure control module can alternatively control the heating components as well. The venting system, including the venting valve 346, 446 can be controlled by a venting module 380, 480. The modules can work together to cycle the system in a manner to cause predictable batch polymerization of the polymerizable composition. Thus, FIG. 1 illustrates an example where the heating module, pressure control module, and venting module, work together to achieve acceptable polymerization results. The controller can also include an additive injection module 390, 490 that can be configured to control an additive injection inlet 392, 492. The additive injection inlet can be connected to an additive injector 340, 440, which can also be controlled by the additive injection module. The additive injector is described in more detail below.

FIG. 5 shows an additional schematic cross-sectional view of an embodiment of an autoclave, similar to that shown in FIGS. 3 and 4, but this autoclave is not an agitated autoclave. The autoclave 510 in FIG. 5 includes an autoclave wall 522 which defines the autoclave vessel 520, and includes one or more type of heating components 524, 526, a venting valve 546, and an extrusion valve opening 528. This example is not an agitated autoclave, thus allowing for the placement of a central pipe or line 542 that can be used to introduce fluids or additives, or vent gases, depending on how the engineer decides to rig the autoclave. Uniquely as compared to the additive injector inlets of FIGS. 3 and 4, the embodiment shown in FIG. 5 includes an inlet port 544 that is associated with the autoclave via the pipe or line, which can be used in conjunction with an additive injector 540 to introduce additives into the autoclave. Thus, an additive injector can introduce additives indirectly by using an existing inlet line.

In further detail regarding the autoclave, in some embodiments, one or more of the mechanisms of the autoclave can be automated. For example, as shown in FIG. 5, the autoclave can include a process controller 550, which can include various sub-controllers or modules 560, 570, 580, 590 and can be used to automatically carry out the general functions or process steps of the autoclave. For example, the heating component(s) 526, 524 can be controlled by a heating module 560. The pressure and inlet of polymerizable polyamide composition into the autoclave can be controlled utilizing the pressure/inlet control module 570 which can control the inlet port/valve 542 and the venting valve 546 of the autoclave. It is noted that pressure can also be controlled, e.g., increased, by increasing heat within the autoclave. Thus, the pressure control module can alternatively control the heating components as well. Similarly, an additive injector module 580 can operate to control the additive injector 540, thereby controlling the timing, amount, specific additive, and/or flow rate of an additive introduced into the autoclave. FIG. 5 also shows an optional water sensor 594 that can be used by the additive injector module 580 to determine when the water content in the autoclave has reached a sufficiently low level to inject the additive. Thus, FIG. 1 illustrates an example where the various modules work together to achieve acceptable polymerization results. It is noted, however, that other modules 590 can also be included that act together with those shown to cycle the apparatus in a manner to cause predictable batch polymerization of the polymerizable polyamide composition. For example, if an agitator is used, the agitation module can be used to control the agitator.

As described above, the additive injector can be in communication with a controller that can be programmed to inject the additive into the autoclave when the polymerizable polyamide composition has a water content that is 30 wt% or less of the initial water content. In some embodiments, this sub-controller can be a module that is a part of a process controller having various modules as described above. Thus, the process controller can include the additive injection module as well as other modules for controlling other aspects of the system. In other embodiments, the controller used for controlling the additive injector can be a separate controller. As used herein, "controller" can refer to a separate, independent controller used to control the additive injector, as well as a module that is a part of an overall process controller.

The controller can generally be programmed to inject the additive into the autoclave when the water content of the polymerizable polyamide composition is 30 wt% or less of the water content when the composition is introduced into the autoclave. In further examples, the controller can be programmed to inject the additive when the water content is less than 20 wt%, less than 10 wt%, or less than 5 wt% of the water content when the composition is introduced into the autoclave. The controller can determine the appropriate timing for the injection in a variety of ways. In one example, the controller can be programmed to inject the additive at a specific point in time during the cycles of the polymerization process. For example, it can be determined experimentally that the water content is sufficiently low at the beginning of Cycle 3. The controller can then be programmed to inject the additive at a certain time during Cycle 3. In one example, the controller can be programmed to inject the additive within the last 3 minutes of the second cycle or within the first 3 minutes of the third cycle.

In further embodiments, the controller can determine the appropriate timing of the injection based on measurements of process variables. In one example, the system can include a water sensor in communication with the controller. The water sensor can be configured to measure the water content of the polymerizable polyamide composition. The controller can then be programmed to inject the additive when the water content as measured by the water sensor reaches the appropriate level. The controller can also determine the timing of the injection based on other process variables. For example, the water content in the polymerizable polyamide composition can be correlated with other variables, such as autoclave temperature, autoclave pressure, venting flow rate, rate of heat transfer to the autoclave, or other measurable variables. Thus, the controller can be programmed to calculate or estimate the water content based on measurements of one or more of these other variables.

Turning now to example polymers that can be prepared using the methods and devices described herein, one can consider the preparation of polyamide polymers, and in particular nylon 6,6. A typical batch size in accordance with examples of the present disclosure can be from 1000 kg to 3000 kg, and can be cycled during the batch within the autoclave at from 100 to 360 minutes, or even more. In one aspect, the cycle duration can be 100 minutes to 180 minutes. In another aspect, the cycle duration can be 100 minutes to 160 minutes. In another aspect, the cycle duration can be less than 155 minutes. In still a further aspect, the cycle duration can be 100 minutes to 155 minutes. Batch sizes and timing outside of these ranges can also be used, depending on equipment and polymer choices, or other considerations within the knowledge of one skilled in the relevant arts.

As mentioned, the polyamide polymers prepared in accordance with examples of the present disclosure can be nylon-type polyamides, such as nylon 6,6. A polymerizable composition used to form nylon 6,6 polymer, for example, can be prepared initially using a salt strike process where adipic acid and hexamethylene diamine reacted. Water present in this composition, either introduced as a solvent to carry the reactants or by the condensation reaction of the adipic acid and the hexamethylene diamine, can be removed when the salt solution is introduced into an evaporator to remove a portion of the water prior to introduction into the agitated autoclave as described herein. This solution, referred to herein as the polymerizable composition, can include the nylon 6,6 salt, as well as other additives, such as anti-foaming agents, catalysts, antioxidant stabilizers, antimicrobial additives, optical brighteners, acid-dyeable polymer, acid dyes or other dyes, as is generally known in the art. If the objective is to whiten the product, titanium dioxide can also be included, but is usually added directly to the autoclave to avoid agglomeration. When prepared for polymerization in the autoclave, the polyamide salt, such as nylon 6,6 salt, can be present in the polymerizable composition in an amount ranging from 50 wt% to 95 wt%, for example.

If a catalyst is added, the catalyst can be present in the polymerizable polyamide composition in an amount ranging from 10 ppm to 1,000 ppm by weight. In another aspect, the catalyst can be present in an amount ranging from 10 ppm to 100 ppm by weight. The catalyst can include, without limitation, phosphoric acid, phosphorous acid, hypophosphoric acid arylphosphonic acids, arylphosphinic acids, salts thereof, and mixtures thereof. In one embodiment, the catalyst can be sodium hypophosphite, manganese hypophosphite sodium phenylphosphinate, sodium phenylphosphonate, potassium phenylphosphinate, potassium phenylphosphonate, hexamethylenediammonium bis-phenylphosphinate, potassium tolylphosphinate, or mixtures thereof. In one aspect, the catalyst can be sodium hypophosphite.

The polyamide compositions prepared in accordance with embodiments disclosed herein can be improved in whiteness appearance through the addition of an optical brightener, such as titanium dioxide. Such polyamides can exhibit a permanent whiteness improvement and can retain this whiteness improvement through operations such as heat setting. In one embodiment, the optical brightener can be present in the polymerizable polyamide in an amount ranging from 0.01 wt% to 1 wt%.

In addition, these polymerizable polyamide compositions may contain an antioxidant stabilizer or an antimicrobial additive.

The polymerizable compositions, in accordance with embodiments of the present disclosure, can be inherently acid dyeable, but may also be rendered into a basic dyeing form by modifying these polymers or copolymers with a cationic dye copolymerized in the polymer. This modification makes compositions particularly receptive to coloration with base dyes.

As previously noted, batch processing is often used in order to make polyamide polymers. Typically, in batch processing, additives for the batch are added in the evaporator in order to remove any excess water associated with the additive. However, this methodology can limit the number of different types of polymers that can be manufactured using the autoclaves associated with a given evaporator. Thus, various embodiments of the current technology describe systems and methods to overcome this challenge.

In one embodiment, a system for production of a polyamide polymer is provided. The system can include a salt strike vessel configured to produce a polyamide salt composition. The system can also include an evaporator configured to receive the polyamide salt composition and reduce its water content to produce a polymerizable polyamide composition. The apparatus can further include an autoclave operably connected to the evaporator such that the polymerizable polyamide composition is deliverable from the evaporator to the autoclave. The autoclave can have any of the configurations described above. Generally, the autoclave can be configured to heat the polymerizable polyamide composition in order to remove additional water from the polymerizable polyamide composition and polymerize the polymerizable polyamide composition. An additive injector can be associated with the autoclave and can be configured to inject additives into the autoclave. A controller can be configured to control the additive injector. The controller can be programmed to inject the additive into the autoclave when the polymerizable polyamide composition has a water content that is 30 wt% or less of the initial water content present when the polymerizable polyamide composition is delivered from the evaporator to the autoclave.

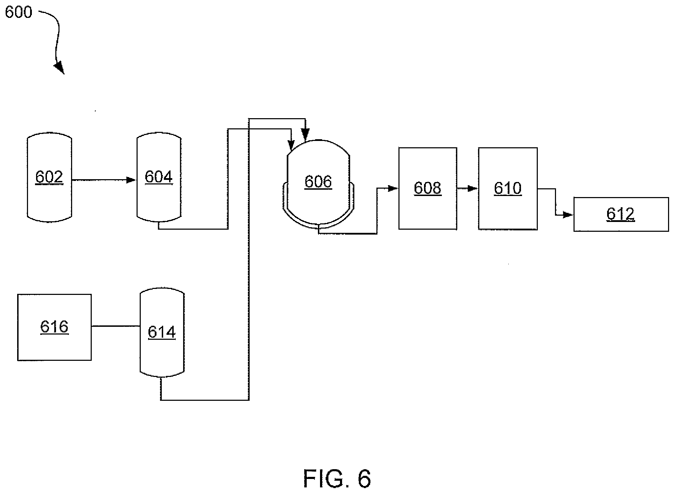

A schematic process flow diagram of an example of such a system is shown in FIG. 6. The system 600 can be used in the process of synthesizing a polyamide polymer as described herein. In one example, a first stage of a process begins with the formation of a polyamide salt composition in a salt strike or salt strike vessel 602. The polyamide salt composition can then be transferred into an evaporator 604 where at least a portion of the water present in the polyamide salt composition is removed, resulting in a polymerizable polyamide composition. As shown in FIG. 6, the evaporator can provide the polymerizable polyamide composition to an autoclave 606, where a second stage is carried out. The first stage is not required to carry out the second stage, as noted herein. The autoclave can be an agitated autoclave or a non-agitated autoclave. The autoclave can be associated with an additive injector 614 that is configured to inject an additive into the associated autoclave. A controller 616 can be in communication with the additive injector to control the timing of the additive injection. Following polymerization of the polymerizable polyamide composition, the polyamide polymer can be cast and cut utilizing casting and cutting equipment 608 and optionally blended utilizing blending equipment 610 to yield a polyamide polymer 612. The additive injector 614 can be connected to the autoclave 606 through an additive injection inlet port, such as the additive injection inlet 392, 492 in FIGS. 3 and 4, or the inlet port 544 shown in FIG. 5.

The additive includes a co-monomer such as the polyetheramines described herein, and the system can include a co-monomer reservoir connected to the additive injector so that the co-monomer is deliverable from the co-monomer reservoir to the autoclave through the additive injector. In some cases, the system can include a co-monomer circulator configured to alternately circulate the co-monomer in the reservoir or deliver the co-monomer to the additive injector. In some embodiments, the co-monomer circulator and the additive injector can be one and the same. In particular, the co-monomer circulator can include a pump that can alternately circulate the co-monomer to the co-monomer reservoir, or inject the co-monomer into the autoclave. The co-monomer circulator can be configured to deliver the co-monomer to the autoclave at a sufficient pressure for injection, which can change depending on the pressure inside the autoclave. In some examples, the co-monomer circulator can be configured to inject the co-monomer at a pressure from 1 to 20.6 bar (14.5 to 300 Psia).

In further embodiments, the system can also include a co-monomer heater configured to heat the co-monomer to a temperature from 170 °C to 320 °C. Thus, the co-monomer can be delivered to the autoclave at a variety of temperatures. In some examples, the co-monomer can be heated to approximately the same temperature as the polymerizable polyamide composition before being injected into the autoclave.

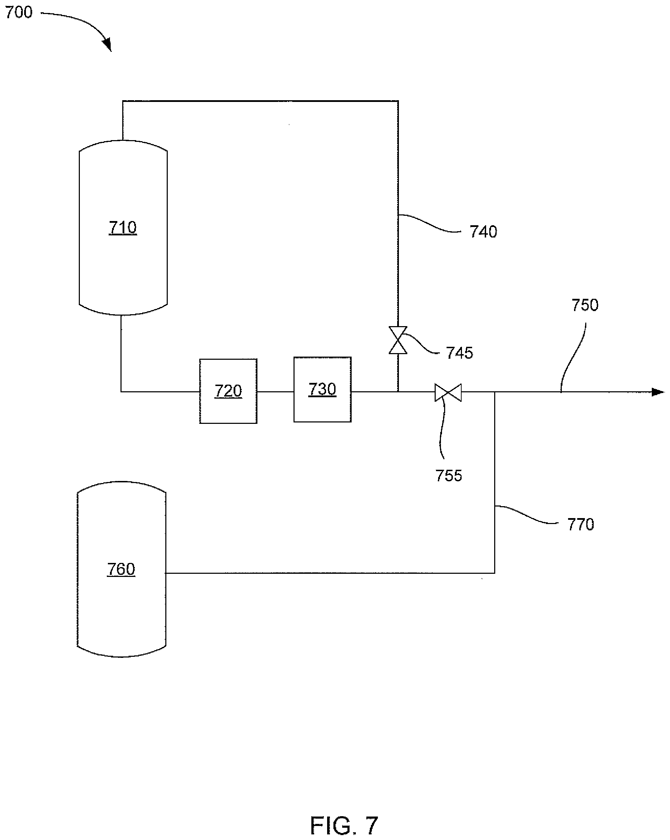

FIG. 7 shows a schematic process flow diagram of an additive injector system 700 including a co-monomer reservoir 710, co-monomer circulator 720, and co-monomer heater 730 as described above. In one embodiment, this system can be used in the place of the additive injector 514 shown in FIG. 5. The co-monomer circulator can be connected to a circulation line 740 through a circulation valve 745, and to an injection line 750 through an injection valve 755. The injection line leads to the autoclave, as shown in FIG. 5. The valves can be alternately opened or closed to circulate the co-monomer or to inject the co-monomer into the autoclave. The system also includes an anti-foaming agent reservoir 760, which is connected to the injection through an anti-foaming agent line 770. Thus, in this particular embodiment, the anti-foaming agent mixes with the co-monomer in the injection line prior to entering the autoclave.

In other embodiments, additive injector systems can include other arrangements of the co-monomer reservoir, co-monomer circulator, and/or co-monomer heater. Thus, the additive injection systems are not limited to the simplified schematic shown in FIG. 7. Furthermore, although the embodiment shown in FIG. 7 includes an antifoaming agent reservoir, this is not required. In some cases, the additive injector can inject co-monomer without any anti-foaming agent. Additionally, in some embodiments the additive injector can inject anti-foaming agent only, without any co-monomer. In further embodiments, the anti-foaming agent and the co-monomer can both be injected into the autoclave, but through two separate additive injectors. Thus, a variety of configurations are encompassed by the present technology.

As a further note, some of the functional units described in this specification have been labeled as "modules," in order to more particularly emphasize their implementation independence. These can likewise be referred to as controllers, sub-controllers. Thus, a "module" may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, or programmable logic devices. Modules may also be implemented in software for execution by various types of processors. An identified module of executable code may, for instance, comprise one or more blocks of computer instructions, which may be organized as an object, procedure, or function. Nevertheless, the executables of an identified module need not be physically located together, but may comprise disparate instructions stored in different locations which comprise the module and achieve the stated purpose for the module when joined logically together.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices. The modules may be passive or active, including agents operable to perform desired functions.

### EXAMPLES

### Comparative Example 1 - Injection of polyetheramine

In a previous process for making polyamide polymers with a polyetheramine, the dosing of the polyetheramine additive at the salt stage results in excessive foaming throughout the system.

A mole balanced aqueous salt solution containing hexamethylenediamine (HMD) and adipic acid (AA) flows from salt strike storage to an evaporation step, where the solution is heated, a polyetheramine is added, and water is vented as steam until the solution contains 85 wt% salt and 2 wt% of the polyetheramine. The concentrated salt solution flows to an autoclave where it is gradually heated (by heating coils) to temperature of 210°C at pressure of 16-20 bar, for example 18 bar. Temperature and pressure are held for a period of time between and 1 and 20 minutes, and then the temperature is increased to 230 to 250°C, and pressure is controlled at a predetermined set point from 16 to 20 bar by venting steam. Next, more heat is added to the system to raise the temperature a third time to 240 to 260°C, while venting the autoclave to atmospheric pressure or to an at least partial vacuum. The autoclave contains four (4) thermocouples at different heights in the autoclave, and foaming is detected by monitoring the temperature profile across the height of the autoclave.

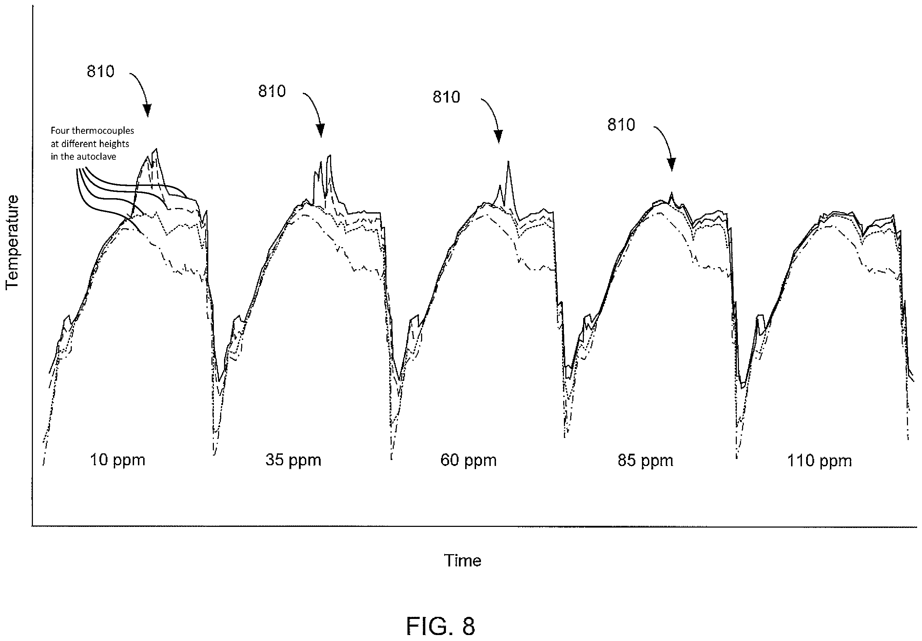

FIG. 8 shows a graph of temperature readings of these sensors over the course of forming several batches of polyamide polymer. The peaks 810 shown in FIG. 8 for the first four batches signify foaming. Foaming causes such peaks in the sensors because when foam rises to the level of a sensor, the temperature reading of the sensor increases quickly.

The temperature profile indicates foam formation in the third heating cycle, and foam is observed in the overhead steam vent lines. Specifically, excessive foaming causes problems by carrying liquid upwardly into vent lines that are not design to convey salt solution or partially polymerized polyamide. In this example, excessive foaming prevents batch completion and requires disassembly and physical cleaning of equipment.

### Comparative Example 2 - Injection of anti-foaming agent

Example 1 is repeated, except that 100 ppmw of a silicone emulsion containing activated polydimethylsiloxane (ACC Silicones Product Code AF1316, silicone antifoam 16% solids; www.acc-silicones.com) is injected during the evaporation step upstream of the autoclave. The temperature profile in the autoclave indicates foam formation in the second heating cycle, and foam is observed in the overhead steam vent lines. The autoclave and vent lines are shut down for cleaning. These results are unexpected because the 100 ppmw dosage of activated polydimethylsiloxane emulsion is otherwise observed to be effective in the absence of the polyetheramine.

### Comparative Example 3 - Injection of anti-foaming agent

Example 1 is repeated, except that 100 ppmw of a copolymeric silicone antifoam (Polyether silicone such as Silwet L-7605 by Momentive Performance Materials; www.momentive.com) is injected during the evaporation step upstream of the autoclave. The temperature profile in the autoclave indicates foam formation in the third heating cycle, and foam is observed in the overhead steam vent lines. The autoclave and vent lines are shut down for cleaning. These results are unexpected because the 100 ppmw dosage of copolymeric silicone antifoam is otherwise observed to be effective in the absence of the polyetheramine.

### Comparative Example 4 - Delayed injection of Polyetheramine

Example 1 is repeated, except that the polyetheramine (2 wt%) is added directly to the autoclave after the first heating cycle and before the second heating cycle.

### Example 5 - Antifoam Dosage

With delayed injection of the polyetheramine, according to the data shown in FIG. 8, the response of the foam detectors decreased (peaks became less pronounced) upon increasing the anti-foam additive concentration in the batch. At a concentration of 85 ppm, almost no foaming was detected. At a concentration of 110 ppm, no foam was detected at all. It should be noted that the mentioned concentrations are including the 10 ppm that is normally added in the conventional process, so the figure for the 10 ppm concentration can be considered as the normal batch.

## Claims

1. A method of preparing a polyamide polymer, comprising;
(a) introducing a polymerizable polyamide composition having an initial water content into an autoclave;
(b) heating the polymerizable polyamide composition to a first temperature T1;
(c) venting water vapor from the autoclave for a first period of time, VT1, and carrying out the following steps (d) through (f) consecutively or concurrently;
(d) injecting at least one foam-promoting additive and an anti-foam additive into the autoclave after VT1, wherein the anti-foam additive is added in a sufficient amount to provide an anti-foam additive concentration of from 110 ppm to 500 ppm in the polymerizable polyamide composition of step (d);
(e) heating the polymerizable polyamide composition of step (d) in the autoclave to a second temperature T2, wherein T2 > T1;
(f) venting water vapor from the autoclave for a second period of time VT2, wherein the polymerizable polyamide composition evolves less foam through the conclusion of this step (f) compared to carrying out the same steps except for injecting the foam-promoting additive to the autoclave in step (a) instead of in step (d); and
(g) polymerizing the polymerizable polyamide composition in the autoclave to produce a polyamide polymer,
wherein the foam-promoting additive is a co-monomer and the co-monomer is a polyetheramine.

2. The method of claim 1 further comprising controlling autoclave conditions at one both of T1 and T2 by measuring and adjusting pressure in the autoclave.

3. The method of claim 1, wherein the anti-foam additive contains silicon.

4. The method of claim 1, wherein the polymerizing includes a plurality of cycles comprising:
(i) a first cycle having a temperature starting between 170 to 215°C and finishing at temperature between 190 to 230°C over a period of 5 to 60 minutes under a pressure of between 8.9 to 20.6 bar;
(ii) a second cycle having a temperature starting between 190 to 230°C and finishing at temperature between 240 to 260°C over a period of 5 to 60 minutes under a pressure of between 8.9 to 20.6 bar;
(iii) a third cycle having a temperature starting between 240 and 260°C and finishing at temperature between 250 to 320°C over a period of between 5 to 60 minutes under a pressure of between 20.6 bar to atmospheric pressure; and
(iv) a fourth cycle having a temperature starting between 250 to 320°C and finishing at temperature between 250 to 320°C over a period of 1 to 80 minutes under a pressure of between atmospheric pressure and 0.2 bar absolute vacuum.

5. The method of claim 1, wherein the autoclave is an agitated autoclave.

## Patentansprüche

1. Verfahren zur Herstellung eines Polyamidpolymers, umfassend:
(a) Einbringen einer polymerisierbaren Polyamidzusammensetzung, die einen anfänglichen Wassergehalt aufweist, in einen Autoklaven;
(b) Erhitzen der polymerisierbaren Polyamidzusammensetzung auf eine erste Temperatur T1;
(c) Ablassen von Wasserdampf eine erste Zeitspanne, VT1, lang aus dem Autoklaven und aufeinanderfolgendes oder gleichzeitiges Ausführen der folgenden Schritte (d) bis (f);
(d) Injizieren von mindestens einem schaumfördernden Additiv und einem Antischaum-Additiv nach VT1 in den Autoklaven, wobei das Antischaum-Additiv in einer ausreichenden Menge zugegeben wird, um in der polymerisierbaren Polyamidzusammensetzung aus Schritt (d) eine Antischaum-Additiv-Konzentration von 110 ppm bis 500 ppm bereitzustellen;
(e) Erhitzen der polymerisierbaren Polyamidzusammensetzung aus Schritt (d) im Autoklaven auf eine zweite Temperatur T2, wobei T2 > T1;
(f) Ablassen von Wasserdampf eine zweite Zeitspanne VT2 lang aus dem Autoklaven, wobei die polymerisierbare Polyamidzusammensetzung bis zum Abschluss dieses Schritts (f) verglichen mit dem Ausführen derselben Schritte mit Ausnahme des Injizierens des schaumfördernden Additivs in Schritt (a) anstatt in Schritt (d) in den Autoklaven weniger Schaum entwickelt; und
(g) Polymerisieren der polymerisierbaren Polyamidzusammensetzung im Autoklaven, um ein Polyamidpolymer zu erzeugen,
wobei das schaumfördernde Additiv ein Comonomer ist und das Comonomer ein Polyetheramin ist.

2. Verfahren nach Anspruch 1, das weiter das Steuern der Autoklavbedingungen bei einem, beiden von T1 und T2 durch Messen und Anpassen des Drucks im Autoklaven umfasst.

3. Verfahren nach Anspruch 1, wobei das Antischaum-Additiv Silikon enthält.

4. Verfahren nach Anspruch 1, wobei das Polymerisieren eine Vielzahl von Zyklen beinhaltet, welche umfassen:
(i) einen ersten Zyklus, der eine Temperatur aufweist, die zwischen 170 bis 215°C startet und bei einer Temperatur zwischen 190 bis 230°C endet, über eine Zeitspanne von 5 bis 60 Minuten unter einem Druck zwischen 8,9 bis 20,6 bar;
(ii) einen zweiten Zyklus, der eine Temperatur aufweist, die zwischen 190 bis 230°C startet und bei einer Temperatur zwischen 240 bis 260°C endet, über eine Zeitspanne von 5 bis 60 Minuten unter einem Druck zwischen 8,9 bis 20,6 bar;
(iii) einen dritten Zyklus, der eine Temperatur aufweist, die zwischen 240 und 260 °C startet und bei einer Temperatur zwischen 250 bis 320°C endet, über eine Zeitspanne zwischen 5 bis 60 Minuten unter einem Druck zwischen 20,6 bar bis Atmosphärendruck; und
(iv) einen vierten Zyklus, der eine Temperatur aufweist, die zwischen 250 bis 320°C startet und bei einer Temperatur zwischen 250 bis 320°C endet, über eine Zeitspanne von 1 bis 80 Minuten unter einem Druck zwischen Atmosphärendruck und 0,2 bar absolutem Vakuum.

5. Verfahren nach Anspruch 1, wobei der Autoklav ein Rührautoklav ist.

## Revendications

1. Procédé de préparation d'un polymère polyamide, comprenant :
(a) l'introduction d'une composition de polyamide polymérisable présentant une teneur en eau initiale dans un autoclave ;
(b) le chauffage de la composition de polyamide polymérisable à une première température T1 ;
(c) l'évacuation de la vapeur d'eau de l'autoclave pendant une première période de temps, VT1, et la mise en oeuvre des étapes (d) à (f) suivantes consécutivement ou simultanément ;
(d) l'injection d'au moins un additif favorisant la formation de mousse et un additif anti-mousse dans l'autoclave après VT1, dans lequel l'additif anti-mousse est ajouté en quantité suffisante pour atteindre une concentration d'additif anti-mousse de 110 ppm à 500 ppm dans la composition de polyamide polymérisable de l'étape (d) ;
(e) le chauffage de la composition de polyamide polymérisable de l'étape (d) dans l'autoclave à une seconde température T2, dans lequel T2 > T1 ;
(f) l'évacuation de la vapeur d'eau de l'autoclave pendant une seconde période de temps VT2, dans lequel la composition de polyamide polymérisable dégage moins de mousse à la fin de cette étape (f) par rapport à la réalisation des mêmes étapes, à l'exception de l'injection de l'additif favorisant la formation de mousse dans l'autoclave à l'étape (a) au lieu de l'étape (d) ; et
(g) la polymérisation de la composition de polyamide polymérisable dans l'autoclave pour produire un polymère polyamide,
dans lequel l'additif favorisant la formation de mousse est un comonomère et le comonomère est une polyétheramine.

2. Procédé selon la revendication 1 comprenant en outre la régulation des conditions d'autoclave à l'une et/ou l'autre parmi T1 et T2 en mesurant et en ajustant la pression dans l'autoclave.

3. Procédé selon la revendication 1, dans lequel l'additif anti-mousse contient du silicium.

4. Procédé selon la revendication 1, dans lequel la polymérisation inclut une pluralité de cycles comprenant :
(i) un premier cycle présentant une température commençant entre 170 et 215 °C et se terminant à une température comprise entre 190 et 230 °C sur une période de 5 à 60 minutes sous une pression comprise entre 8,9 et 20,6 bars ;
(ii) un deuxième cycle présentant une température commençant entre 190 et 230 °C et se terminant à une température comprise entre 240 et 260 °C sur une période de 5 à 60 minutes sous une pression comprise entre 8,9 et 20,6 bars ;
(iii) un troisième cycle présentant une température commençant entre 240 et 260 °C et se terminant à une température comprise entre 250 et 320 °C sur une période comprise entre 5 et 60 minutes sous une pression comprise entre 20,6 bars et la pression atmosphérique ; et
(iv) un quatrième cycle présentant une température commençant entre 250 et 320 °C et se terminant à une température comprise entre 250 et 320 °C sur une période de 1 à 80 minutes sous une pression comprise entre la pression atmosphérique et 0,2 bar de vide absolu.

5. Procédé selon la revendication 1, dans lequel l'autoclave est un autoclave agité.
